(19) Europäisches Patentamt
European Patent Office
Office européen des brevets

(11) EP 4 704 329 A1

(12) EUROPEAN PATENT APPLICATION

(43) Date of publication:
04.03.2026 Bulletin 2026/10

(21) Application number: 24198267.7

(22) Date of filing: 03.09.2024

(51) International Patent Classification (IPC):
$H02P\ 21/04^{(2006.01)}$    $H02P\ 21/36^{(2016.01)}$
$B60L\ 15/20^{(2006.01)}$

(52) Cooperative Patent Classification (CPC):
B60L 15/20; B60L 15/025; B60L 15/22;
H02P 21/04; H02P 21/36; B60L 2210/40;
B60L 2240/423; B60L 2240/429; B60L 2260/26;
B60L 2270/145

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: VOLVO TRUCK CORPORATION
405 08 Göteborg (SE)

(72) Inventors:
• LU, Kuang
417 57 GÖTEBORG (SE)
• OTTOSSON, Jonas
311 79 FALKENBERG (SE)

(74) Representative: Ström & Gulliksson AB
P.O. Box 4188
203 13 Malmö (SE)

(54) **SYSTEM AND METHOD FOR CONTROLLING AN ELECTRICAL MACHINE**

(57)     A computer system is provided. The computer system comprises processing circuitry configured to: determine that zero torque is requested from an electrical machine (10) of a vehicle drivetrain (11); determine a limited $d$ current ($I_{dlim}$) within an allowable $d$ current interval ($I_{d\_min/max}$), said limited $d$ current ($I_{dlim}$) being different from an optimum $d$ current ($I_{dopt}$) to obtain the zero torque request; and control the electrical machine (10) based on the limited $d$ current ($I_{dlim}$) to obtain the zero torque request.

FIG. 5

## Description

### TECHNICAL FIELD

The disclosure relates generally to electrical machines. In particular aspects, the disclosure relates to systems and methods for controlling electrical machines. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When controlling the torque in fully or partly electrically driven vehicles, typically a dead time is implemented on switches in order to prevent short-circuit of the inverter phase legs.. The dead time can be split between the switches in a phase leg or applied to only one of the switches. If it is applied to one switch, this should be done based on the sign of the current in order to not distort the output voltage. When torque is approaching zero, e.g. when going from traction mode to regeneration mode or vice versa, the currents are typically very small. Due to noise, when the phase current is close to zero it is difficult to determine the sign of the current. Potentially this may lead to a wrong assessment of the current sign, which in turn may lead to incorrect operation of the switches and a distorted voltage output. When such situations occur, it may lead to a sudden torque jump which will affect the driveability of the vehicle negatively.

Based on the above, there is a need to reduce the risk for unwanted torque jumps.

### SUMMARY

According to a first aspect of the disclosure, a computer system is provided. The computer system comprises processing circuitry configured to determine that zero torque is requested from an electrical machine of a vehicle drivetrain; determine a limited $d$ current within an allowable $d$ current interval, said limited $d$ current being different from an optimum $d$ current to obtain the zero torque request; and control the electrical machine based on the limited $d$ current to obtain the zero torque request. The first aspect of the disclosure may seek to allow for a stronger indication of the sign of the phase currents, thereby reducing the risk for erroneous operation of the switches. A technical benefit may include reducing the risk for torque jumps at zero torque requests, such as when controlling the electrical machine from traction mode to regeneration mode and vice versa.

Optionally in some examples, including in at least one preferred example, the processing circuitry is further configured to: determine that zero torque is requested based on a request to change the current drive mode from traction mode to regeneration mode or vice versa. A technical benefit may include specific implementation at situations where torque jumps are highly disadvantageous.

Optionally in some examples, including in at least one preferred example, the limited $d$ current is a negative $d$ current being less than the optimum $d$ current. As the limited $d$ current is negative, this means that the absolute value of the limited $d$ current will be greater than zero. A technical benefit may include that the phase currents are limited to small sinusoidal waves instead of zero, thereby allowing the sign of the phase currents to be more easily detected during the zero crossing.

Optionally in some examples, including in at least one preferred example, the processing circuitry is further configured to obtain the allowable $d$ current interval based on a MTPA map. A technical benefit may include a fast and reliable definition of the minimum allowed absolute $d$ current.

Optionally in some examples, including in at least one preferred example, the processing circuitry is further configured to obtain a truncated MTPA map defining the limited $d$ current. A technical benefit may include facilitated control of the electrical machine, always ensuring that a stronger identification of the sign of the phase currents is achieved.

Optionally in some examples, including in at least one preferred example, the limited $d$ current is the minimum absolute $d$ current of the truncated MTPA map. A technical benefit may include simple and robust control of the electrical machine.

Optionally in some examples, including in at least one preferred example, controlling the electrical machine based on the limited $d$ current increases the amplitude of a resulting phase current. A technical benefit may include causing increased magnitude of the resulting phase currents, which in turn allows the sign to be detected more easily and with less error.

Optionally in some examples, including in at least one preferred example, the processing circuitry is further configured to apply a switch dead time based on the sign of the phase current. A technical benefit may include a direct and accurate control of the electrical machine while reducing the risk for torque jumps.

Optionally in some examples, including in at least one preferred example, the processing circuitry is further configured to determine that zero torque is requested based on a request to change the current drive mode from traction mode to regeneration mode or vice versa; obtain the allowable $d$ current interval based on a MTPA map; obtain a truncated MTPA map defining the limited $d$ current, wherein the limited $d$ current is the minimum absolute $d$ current of the truncated MTPA map and wherein the limited $d$ current is a negative $d$ current being less than the optimum $d$ current; wherein controlling the electrical machine based on the limited $d$ current increases the amplitude of a resulting phase current; wherein the processing circuitry is further configured to determine a switch dead time based on the sign of the phase current; and wherein the electrical machine is controlled based on the limited $d$ current as long as the optimum $d$ current for a current torque request is smaller than the absolute value of the limited $d$ current. A technical benefit may include that the risk for torque jumps is reduced throughout a transition across zero torque, and not only when the requested torque is exactly zero.

According to a second aspect of the disclosure, a vehicle is provided. The vehicle comprises the computer system according to the first aspect. The second aspect of the disclosure may seek to allow for improved driving characteristics of the vehicle. A technical benefit may include a smoother driver experience as the risk for torque jumps is reduced.

Optionally in some examples, including in at least one preferred example, the vehicle further comprises a drive train comprising at least one electrical machine; and a machine controller configured to supply at least one phase current to the electrical machine. A technical benefit may include providing improved operation of an electrical drive train of a vehicle.

According to a third aspect of the disclosure, a computer-implemented method is provided. The computer-implemented method comprises determining, by processing circuitry of a computer system, that zero torque is requested from an electrical machine of a vehicle drivetrain; determining, by the processing circuitry, a limited $d$ current within an allowable $d$ current interval, said limited $d$ current being different from an optimum $d$ current to obtain the zero torque request; and controlling, by the processing circuitry, the electrical machine based on the limited $d$ current to obtain the zero torque request. The third aspect of the disclosure may seek to allow for a stronger indication of the sign of the phase currents, thereby reducing the risk for erroneous operation of the switches. A technical benefit may include reducing the risk for torque jumps at zero torque requests, such as when controlling the electrical machine from traction mode to regeneration mode and vice versa.

Optionally in some examples, including in at least one preferred example, the method further comprises determining, by the processing circuitry, that zero torque is requested based on a request to change the current drive mode from traction mode to regeneration mode or vice versa. A technical benefit may include specific implementation at situations where torque jumps are highly disadvantageous.

Optionally in some examples, including in at least one preferred example, the limited $d$ current is a negative $d$ current being less than the optimum $d$ current. A technical benefit may include that the phase currents are limited to small sinusoidal waves instead of zero, thereby allowing the sign of the phase currents to be more easily detected during the zero crossing.

Optionally in some examples, including in at least one preferred example, the method further comprises obtaining, by the processing circuitry, the allowable $d$ current interval based on a MTPA map. A technical benefit may include a fast and reliable definition of the minimum allowed absolute $d$ current.

Optionally in some examples, including in at least one preferred example, the method further comprises obtaining, by the processing circuitry, a truncated MTPA map defining the limited $d$ current. A technical benefit may include facilitated control of the electrical machine, always ensuring that a stronger identification of the sign of the phase currents is achieved.

Optionally in some examples, including in at least one preferred example, the limited $d$ current is the maximum $d$ current of the truncated MTPA map. Preferably, the allowed values for the $d$ current are negative, such that the maximum $d$ current equals the minimum absolute value of the $d$ current A technical benefit may include simple and robust control of the electrical machine.

Optionally in some examples, including in at least one preferred example, controlling the electrical machine based on the limited $d$ current increases the amplitude of a resulting phase current. A technical benefit may include causing increased magnitude of the resulting phase currents, which in turn allows the sign to be detected more easily and with less error.

According to a fourth aspect of the disclosure, a computer program product is provided The computer program product comprises program code for performing, when executed by the processing circuitry, the method of the third aspect of the disclosure. The fourth aspect of the disclosure may seek to allow for a stronger indication of the sign of the phase currents, thereby reducing the risk for erroneous operation of the switches. A technical benefit may include reducing the risk for torque jumps at zero torque requests, such as when controlling the electrical machine from traction mode to regeneration mode and vice versa.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect of the disclosure. The fifth aspect of the disclosure may seek to allow for a stronger indication of the sign of the phase currents, thereby reducing the risk for erroneous operation of the switches. A technical benefit may include reducing the risk for torque jumps at zero torque requests, such as when controlling the electrical machine from traction mode to regeneration mode and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

FIG. 1 is an exemplary side view of a vehicle according to an example.

FIG. 2 is an exemplary system diagram of an electrical machine controller according to an example.

FIG. 3 is an exemplary diagram of torque request for an electrical machine during driving of a vehicle, transitioning from propulsion mode to regeneration mode.

FIG. 4 is an exemplary diagram of an MTPA map with limited $d$ current.

FIG. 5 is an exemplary system diagram of an electrical machine control system according to an example.

FIG. 6 is an exemplary system diagram of an electrical machine control system according to an example.

FIG. 7 is a flow chart of an exemplary electrical machine control method according to an example.

FIG. 8 is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

The examples presented herein provide a solution to the problem of torque jumps due to a misinterpreted sign of the phase currents supplied to an electrical machine.

Especially when implementing half-bridge converters, the electrical machine is connected between an output of an upper switch and a lower switch of a half bridge converter. Control signals are used to control the output current to the electrical machine, and each one of the upper switch and the lower switch are supplied with control signal for opening and closing the respective switch. In order to avoid both switches to be open and conducting at the same time, a dead time is normally utilized. The dead time is only applied to one of the switches, depending on the sign of the phase current. Hence, depending on the reference current sign the dead time is removed from the upper or lower switch. Actual currents are however noisy, and therefore the actual sign may be difficult to determine when the amplitude is very low.

When the torque request passes zero, for example during transition from motoring mode to regeneration mode, around zero torque the reference currents go from positive to negative. If the actual currents are still positive, the dead time is added to the wrong switch.

When the $d$ current is limited to a small negative value (instead of being zero), the resulting phase currents will be limited to small sinusoidal waves instead of zero. Hence, the sign of the phase current can be obtained more easily, reducing the risk for the dead time to be applied to the wrong switch.

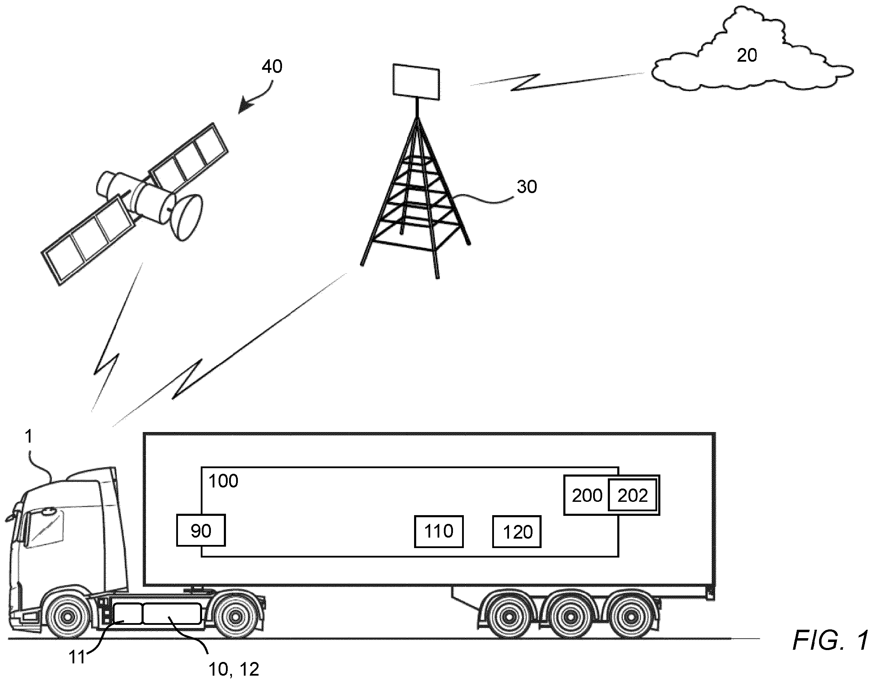

FIG. 1 is an exemplary view of a vehicle **1** according to one example. The vehicle **1** comprises at least one electrical machine **10** used to propel the vehicle **1**. The at least one electrical machine **10** may be powered by an energy storage system **11** configured to provide electrical energy to the one or more electrical machines **10.**

The at least one electrical machine **10** is controlled by an electrical machine controller **12,** acting as a master controller for operation of the at least one electrical machine **10.**

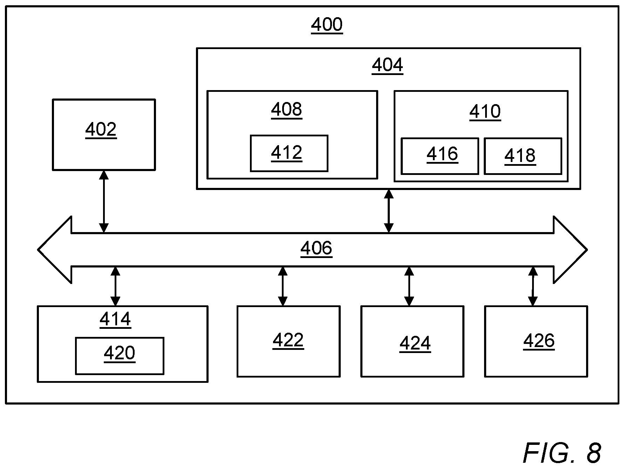

The vehicle **1** comprises, at least to some extent, processing circuitry **110** forming part of a computer system **100** (see **FIG. 8**). The processing circuitry **110** is configured to implement an electrical machine control system **200** which is configured to be operatively connected to the electrical machine controller **12.**

The vehicle **1** may further comprise communications circuitry **90** configured to receive and/or send communications. The communications circuitry **90** may be configured to enable the vehicle **1** to communicate with one or more external devices or systems such as a cloud server **20.** The communication with the external devices or systems may be directly or via a communications interface such as a cellular communications interface **30,** such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **1** may for example be configured to utilize data obtain from the GNSS **40** to determine a geographical location of the vehicle **1.**

The vehicle **1** in **FIG. 1** comprises the computer system **100** and the electrical machine control system **200**. The computer system **100** may be operatively connected to the electrical machine control system **200** and optionally to the communications circuitry **90** of the vehicle **1**. The computer system **100** comprises processing circuitry **110**. The computer system **100** may comprise a storage device **120**, advantageously a non-volatile storage device such as a hard disk drives (HDDs), solid-state drives (SSDs) etc. In some examples, the storage device **120** is operatively connected to the computer system **100**. The electrical machine control system **200** may comprise electrical machine control system processing circuitry **202**; the electrical machine control system processing circuitry **202** may be part of the processing circuitry **110** of the computer system **100**.

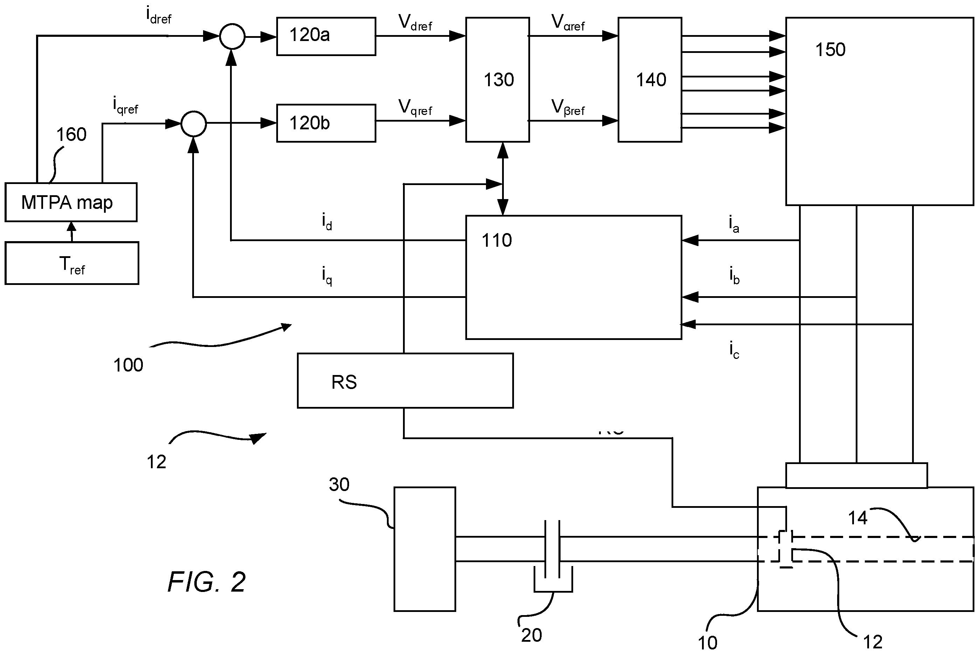

**FIG. 2** is an exemplary system diagram of an electrical machine controller **12**. The electrical machine controller **12** is configured to control an electrical machine **10**. The electrical machine **10** may optionally be provided with a resolver **12** configured to transmit a resolver signal **RS** being indicative of the current position of a rotor **14** of the electrical machine **10**.

The electrical machine controller **12** further implements a computer system **100**. The computer system **100** is programmed to allow field-oriented control (FOC) of the electrical machine **10**. The computer system **100** may, as an example, comprise a transformation circuitry **110** configured to measure and transform the motor phase currents $i_a$, $i_b$, $i_c$ to the dq frame, resulting in measured dq frame currents $i_d$ and $i_q$. These transformed currents $i_d$ and $i_q$ are compared to reference currents $i_{dref}$ and $i_{qref}$ (i.e. the flux reference and the torque reference) by regulators **120a, 120b,** outputting reference voltages $V_{dref}$ and $V_{qref}$ in the dq frame. An inverse transformation circuitry **130** is configured to invert the reference voltages $V_{dref}$ and $V_{qref}$ to the voltage components $V_{\alpha ref}$ and $V_{\beta ref}$ of the stator vector voltage in the stationary orthogonal reference frame. These reference voltages are inputs to a space vector pulse-width modulator **140** which is configured to provide drive signals to an inverter

**150**.

With reference to the above description of the switches of the half bridge converter, these are typically forming part of the inverter **150**.

In order to provide the propulsion force to the vehicle **1,** the electrical machine **10** may be connected to further drivetrain components **30,** for example via a disconnect clutch **20** which is arranged to allow disconnection of the electrical machine **10** from the downstream drivetrain components **30** connected to it. In a vehicle application, such drivetrain components **30** may typically be a wheel shaft or a wheel hub, a speed reducer, or a differential mechanism.

According to examples described herein, the electrical machine controller **12** is configured to control the electrical machine **10** based on the d current $i_d$ and q current $i_q$ in accordance with a method **300** described with reference to **FIG. 8**. In particular, the electrical machine controller **12** is configured to obtain, such as by receiving or by determining, a torque request $T_{ref}$. The torque request $T_{ref}$ is used as a basis for determining the reference currents $i_{dref}$ and $i_{qref}$, which are obtained using a truncated MTPA map **160**.

It should be noted that any part of the computer system **100,** as well as any processing circuitry programmed to perform the method **300,** could be implemented as embedded software and/or hardware with a computer system **100** configured to control the operation of the electrical machine **10**. However, any processing circuitry programmed to perform the method **300,** could in other examples be implemented as a stand-alone application.

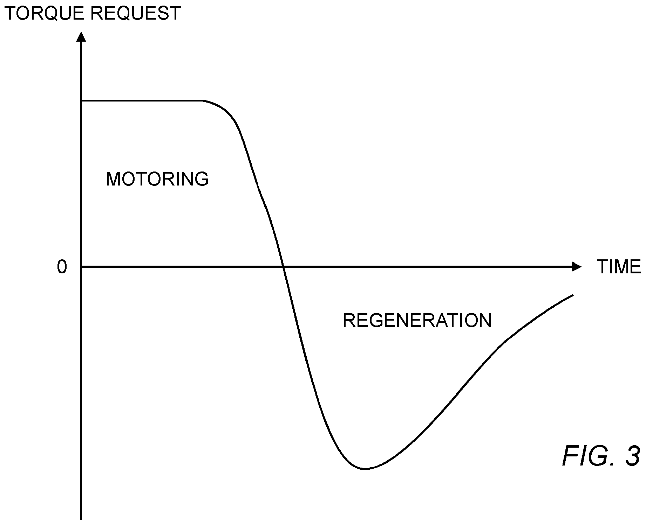

**FIG. 3** shows an exemplary diagram of torque request during operation of a vehicle **1**. Initially the vehicle **1** operates in a motoring mode, i.e. the electrical machine **10** is controlled to provide a positive torque to the drivetrain. Upon a braking action, which may be initiated by a driver of the vehicle **1,** the torque request is reduced in order to allow the electrical machine **10** to provide a negative braking torque to the drivetrain. When transitioning from motoring mode to regeneration mode, the torque request will at some point be zero, indicated by the curve crossing the x axis.

The electrical machine controller **12** is configured to receive the torque request represented by reference d and q currents $i_d$, $i_q$.

The requested torque may be obtained by determining corresponding reference d and q currents $i_d$, $i_q$, and to feed these d and q currents $i_d$, $i_q$ as reference currents $i_{dref}$, $i_{qref}$ (see **FIG. 2**). The reference currents $i_{dref}$, $i_{qref}$ can be determined from a map defining the Maximum Torque Per Ampere (MTPA). The map may be used by setting the d-axis current commands for the current control loop to negative values at maximum torque per ampere trajectory. Consequently, the motor torque is maximized with respect to the current phase angle at constant current amplitude.

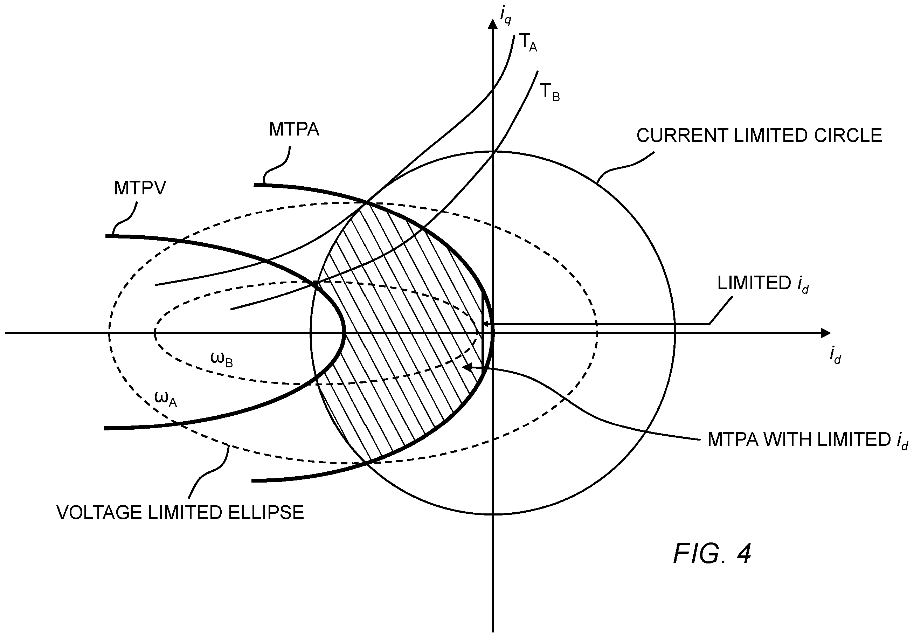

**FIG. 4** shows an exemplary illustration of an MTPA map. The y axis represents the q current $i_q$, and the x axis represents the d current $i_d$. The unity circle defines

the maximum current $I_{max} = \sqrt{(i_d^2 + i_q^2)}$. The two semi-ellipses, indicated by MTPA and Maximum Torque Per Volt (MTPV) together set the boundaries for the allowable current combinations. $T_A$ represents the constant torque curve of the electrical machine **10** with different d and q current combinations, and $T_B$ represents a lower constant torque curve of the electrical machine **10**. $\omega_A$ represents the rated speed of the electrical machine **10**, while $\omega_B$ represents a speed being higher than the rated speed of the electrical machine **10**.

As can be seen in **FIG. 4,** the MTPA curve extends until the d current is zero, which will result in zero phase currents when the torque request is zero. In accordance with the examples described herein, the MTPA map is truncated as indicated by the dashed area, representing the allowable combinations of the $d$ and $q$ currents $\mathbf{i_d}$, $\mathbf{i_q}$. Due to the truncation, allowable values for the $d$ current $\mathbf{i_d}$ extend from a maximum negative value $\mathbf{i_{dmax}}$ to a limited minimum negative value $\mathbf{i_{dmin}}$, where the absolute value of $\mathbf{i_{dmin}}$ is greater than zero. Notably, it should be noted that the absolute value of $\mathbf{i_{dmax}}$ is greater than the absolute value of $\mathbf{i_{dmin}}$. When using the truncated MTPA map, the resulting $d$ current $\mathbf{i_d}$ is never zero but due to its magnitude it will always generate a small phase current even when the torque request is zero.

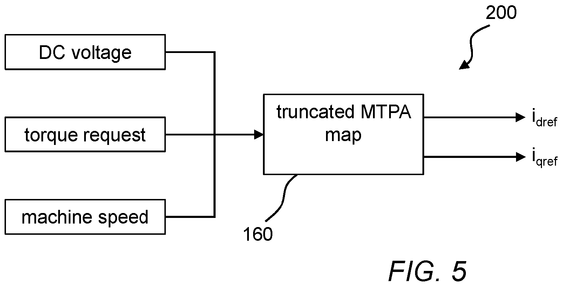

**FIG. 5** shows an exemplary system diagram of an electrical machine control system **200**. The electrical machine control system **200** is configured to receive and/or determine a torque request from e.g. some high-level electronic control unit. Based on that torque request and preferably also the machine speed and the DC-voltage the truncated map provides the $d, q$ current references. In some examples the truncated map may be two maps, one for $d$ current and one for the $q$ current. For torque requests above approximately 5 Nm or speeds higher than base speed the truncated map and the "optimal" map may be the same. Hence it may not be necessary to determine if the vehicle is motoring or generating, or if the torque is close to zero, as everything is "built-in" to the map itself.

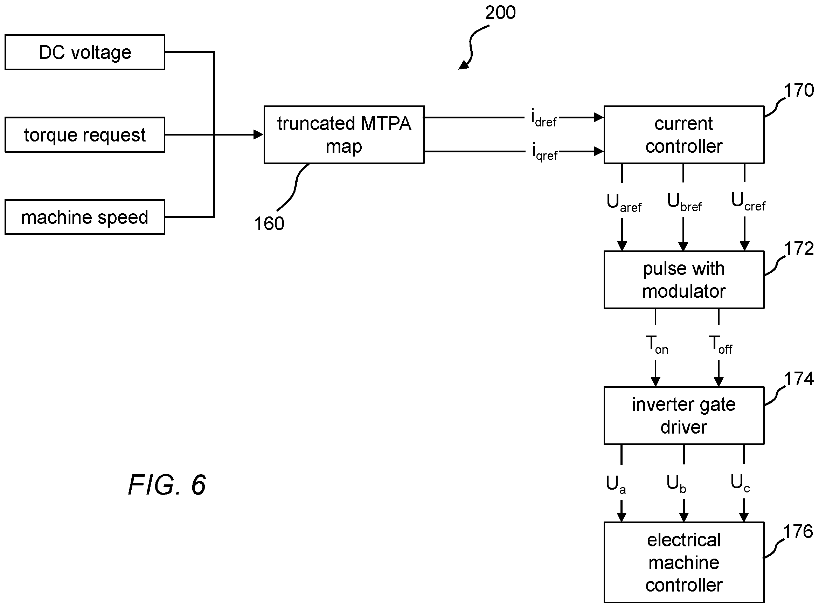

**FIG. 6** shows an exemplary system diagram of an electrical machine control system **200**. As for the electrical machine control system **200** described with respect to **FIG. 5,** the $d, q$ current references ae obtained from a truncated map **160** using a torque request, preferably as well as the machine speed and the DV voltage. Based on the torque request, the machine speed and the DC voltage, the truncated map with limited $d$ current will output the current references $i_{dref}$ $i_{qref}$. A current controller **170** will compare actual currents and reference currents and output the reference phase voltages $U_{aref}$ $U_{bref}$ and $U_{cref}$. Then a pulse width modulator **172**, e.g. formed by a pulse width modulation subsystem, will calculate the turn-on and turn-off time $T_{on}$ $T_{off}$ for each switch, the dead time compensation will be considered here. An inverter gate driver **174** will turn on or turn off for certain amount of time to generate the desired phase voltages $U_a$ $U_b$ $U_c$ in order to control the electrical machine using an electrical machine controller **176**.

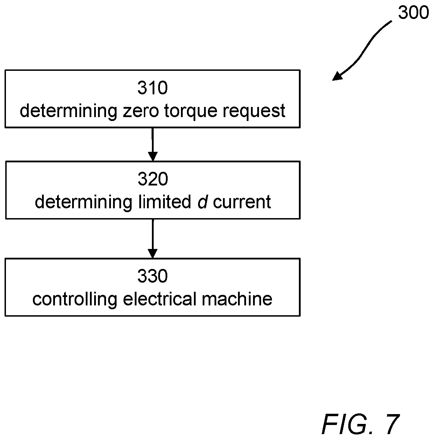

**FIG. 7** is a flow chart of an exemplary electrical machine control method **300** according to an example. The method **300** comprises determining **310,** by processing circuitry of a computer system, that zero torque is requested from an electrical machine **10** of a vehicle drivetrain **11**. The method **300** further comprises determining **320,** by the processing circuitry, a limited $d$ current $\mathbf{i_{dlim}}$ within an allowable $d$ current interval $\mathbf{i_{dmax}}$ - $\mathbf{i_{dlim}}$, said limited $d$ current $\mathbf{i_{dlim}}$ being different from an optimum $d$ current $\mathbf{i_{dopt}}$ to obtain the zero torque request. The method **300** further comprises controlling **330,** by the processing circuitry, the electrical machine **10** based on the limited $d$ current $\mathbf{i_{dlim}}$ to obtain the zero torque request.

**FIG. 8** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406**. The computer system **400** may include at least one computing device having the processing circuitry **402**. The system bus **406** provides an interface for system components including, but not limited to, the memory **404** and the processing circuitry **402**. The processing circuitry **402** may include any number of hardware components for conducting data or signal processing or for executing computer code stored in memory **404**. The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418**. All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system comprising processing circuitry configured to: determine that zero torque is requested for an electrical machine (10) of a vehicle drivetrain (11); determine a limited $d$ current ($I_{dlim}$) within an allowable $d$ current interval ($I_{dmax}$ - $I_{dlim}$), said limited $d$ current ($I_{dlim}$) being different from an optimum $d$ current ($I_{dopt}$) to obtain the zero torque request; and control the electrical machine (10) based on the limited $d$ current ($I_{dlim}$) to obtain the zero torque request.

**Example 2:** The computer system of Example 1, wherein the processing circuitry is further configured to: determine that zero torque is requested based on a request to change the current drive mode from traction mode to regeneration mode or vice versa.

**Example 3:** The computer system of any of Examples 1-2, wherein the limited $d$ current ($I_{dlim}$) is a negative $d$ current being less than the optimum $d$ current ($I_{dopt}$).

**Example 4:** The computer system of any of Examples 1-3, wherein the processing circuitry is further configured to: obtain the allowable $d$ current interval ($I_{d\_min/max}$) based on a MTPA map (160).

**Example 5:** The computer system of Example 4, wherein the processing circuitry is further configured to: obtain a truncated MTPA map (160) defining the limited $d$ current ($I_{dlim}$).

**Example 6:** The computer system of Example 5, wherein the limited $d$ current ($I_{dlim}$) is the minimum absolute $d$ current of the truncated MTPA map (160).

**Example 7:** The computer system of any of Examples 1-6, wherein controlling the electrical machine (10) based on the limited $d$ current ($I_{dlim}$) increases the amplitude of a resulting phase current ($I_a$).

**Example 8:** The computer system of Example 7, wherein the processing circuitry is further configured to: apply a switch dead time based on the sign of the phase current ($I_a$).

**Example 9:** The computer system of Example 1, wherein the processing circuitry is further configured to: determine that zero torque is requested based on a request to change the current drive mode from traction mode to regeneration mode or vice versa; obtain the allowable $d$ current interval ($I_{d\_min/max}$) based on a MTPA map (160); obtain a truncated MTPA map (160) defining the limited $d$ current ($I_{dlim}$), wherein the limited $d$ current ($I_{dlim}$) is the minimum absolute $d$ current of the truncated MTPA map (160) and wherein the limited $d$ current ($I_{dlim}$) is greater than the optimum $d$ current ($I_{dopt}$); wherein controlling the electrical machine (10) based on the limited $d$ current ($I_{dlim}$) increases the amplitude of a resulting phase current ($I_a$); wherein the processing circuitry is further configured to determine a switch dead time based on the sign of the phase current ($I_a$); and wherein the electrical machine (10) is controlled based on the limited $d$ current ($I_{dlim}$) as long as the optimum $d$ current ($I_{dopt}$) for a current torque request is smaller than the limited $d$ current ($I_{dlim}$).

**Example 10:** A vehicle (1) comprising the computer system (100) of any of Examples 1-9.

**Example 11:** The vehicle (1) of Example 10, further comprising: a drive train (11) comprising at least one electrical machine (10); and an electrical machine control system (200) configured to supply at least one phase current ($I_a$) to the electrical machine (10).

**Example 12:** A computer-implemented method (300), comprising: determining (310), by processing circuitry of a computer system, that zero torque is requested for an electrical machine (10) of a vehicle drivetrain (11); determining (320), by the processing circuitry, a limited $d$ current ($I_{dlim}$) within an allowable $d$ current interval ($I_{d\_min/max}$), said limited $d$ current ($I_{dlim}$) being different from an optimum $d$ current ($I_{dopt}$) to obtain the zero torque request; and controlling (330), by the processing circuitry, the electrical machine (10) based on the limited $d$ current ($I_{dlim}$) to obtain the zero torque request.

**Example 13:** The method of Example 12, further comprising: determining, by the processing circuitry, that zero torque is requested based on a request to change the current drive mode from traction mode to regeneration mode or vice versa.

**Example 14:** The method of Example 12 or 13, wherein the limited $d$ current ($I_{dlim}$) is greater than the optimum $d$ current ($I_{dopt}$).

**Example 15:** The method of any of Examples 12-14, further comprising: obtaining, by the processing circuitry, the allowable $d$ current interval ($I_{d\_min/max}$) based on a MTPA map.

**Example 16:** The method of Example 15, further comprising: obtaining, by the processing circuitry, a truncated MTPA map defining the limited $d$ current ($I_{dlim}$).

**Example 17:** The method of Example 16, wherein the limited $d$ current ($I_{dlim}$) is the minimum absolute $d$ current of the truncated MTPA map.

**Example 18:** The method of any of Examples 12-17, wherein controlling the electrical machine (10) based on the limited $d$ current ($I_{dlim}$) increases the amplitude of a resulting phase current ($I_a$).

**Example 19:** A computer program product comprising program code for performing, when executed by the processing circuitry, the method of any of Examples 12-18.

**Example 20:** A non-transitory computer-readable storage medium comprising instructions, which when executed by the processing circuitry, cause the processing circuitry to perform the method of any of Examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system comprising processing circuitry configured to:

   determine that zero torque is requested for an electrical machine (10) of a vehicle drivetrain (11);
   determine a limited $d$ current ($I_{dlim}$) within an allowable $d$ current interval ($I_{dmax}$ - $I_{dlim}$), said limited $d$ current ($I_{dlim}$) being different from an optimum $d$ current ($I_{dopt}$) to obtain the zero torque request; and
   control the electrical machine (10) based on the limited $d$ current ($I_{dlim}$) to obtain the zero torque request.

2. The computer system of claim 1, wherein the processing circuitry is further configured to:
   determine that zero torque is requested based on a request to change the current drive mode from traction mode to regeneration mode or vice versa.

3. The computer system of any of claims 1-2, wherein the limited $d$ current ($I_{dlim}$) is a negative $d$ current being less than the optimum $d$ current ($I_{dopt}$).

4. The computer system of any of claims 1-3, wherein the processing circuitry is further configured to:
   obtain the allowable $d$ current interval ($I_{d\_min/max}$) based on a MTPA map (160).

5. The computer system of claim 4, wherein the processing circuitry is further configured to:
   obtain a truncated MTPA map (160) defining the limited $d$ current ($I_{dlim}$).

6. The computer system of claim 5, wherein the limited $d$ current ($I_{dlim}$) is the minimum absolute $d$ current of the truncated MTPA map (160).

7. The computer system of any of claims 1-6, wherein controlling the electrical machine (10) based on the limited $d$ current ($I_{dlim}$) increases the amplitude of a resulting phase current ($I_a$).

8. The computer system of claim 7, wherein the processing circuitry is further configured to:
   apply a switch dead time based on the sign of the phase current ($I_a$)

9. The computer system of claim 1, wherein the processing circuitry is further configured to:

   determine that zero torque is requested based on a request to change the current drive mode from traction mode to regeneration mode or vice versa;
   obtain the allowable $d$ current interval ($I_{d\_min/max}$) based on a MTPA map (160);
   obtain a truncated MTPA map (160) defining the limited $d$ current ($I_{dlim}$), wherein the limited $d$ current ($I_{dlim}$) is the minimum absolute $d$ current of the truncated MTPA map (160) and wherein the limited $d$ current ($I_{dlim}$) is greater than the optimum $d$ current ($I_{dopt}$);
   wherein controlling the electrical machine (10) based on the limited $d$ current ($I_{dlim}$) increases the amplitude of a resulting phase current ($I_a$);
   wherein the processing circuitry is further configured to determine a switch dead time based on the sign of the phase current ($I_a$); and
   wherein the electrical machine (10) is controlled based on the limited $d$ current ($I_{dlim}$) as long as the optimum $d$ current ($I_{dopt}$) for a current torque request is smaller than the limited absolute $d$ current ($I_{dlim}$).

10. A vehicle (1) comprising the computer system (100) of any of claims 1-9.

11. The vehicle (1) of claim 10, further comprising:

   a drive train (11) comprising at least one electrical machine (10); and
   an electrical machine control system (200) configured to supply at least one phase current ($I_a$) to the electrical machine (10).

12. A computer-implemented method (300), comprising:

   determining (310), by processing circuitry of a computer system, that zero torque is requested for an electrical machine (10) of a vehicle drivetrain (11);
   determining (320), by the processing circuitry, a limited $d$ current ($I_{dlim}$) within an allowable $d$ current interval ($I_{d\_min/max}$), said limited $d$ current ($I_{dlim}$) being different from an optimum $d$ current ($I_{dopt}$) to obtain the zero torque request; and
   controlling (330), by the processing circuitry, the electrical machine (10) based on the limited $d$ current ($I_{dlim}$) to obtain the zero torque request.

13. The method of claim 12, further comprising:
   determining, by the processing circuitry, that zero torque is requested based on a request to change the current drive mode from traction mode to regeneration mode or vice versa.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.

FIG. 1

FIG. 2

FIG. 3

*FIG. 4*

*FIG. 5*

FIG. 6

EP 4 704 329 A1

```
                                              ┌─────────── 300
                                             /
                                            ◄
        ┌──────────────────────────────┐
        │              310              │
        │ determining zero torque request │
        └──────────────────────────────┘
                        │
                        ▼
        ┌──────────────────────────────┐
        │              320              │
        │   determining limited d current   │
        └──────────────────────────────┘
                        │
                        ▼
        ┌──────────────────────────────┐
        │              330              │
        │  controlling electrical machine  │
        └──────────────────────────────┘
```

*FIG. 7*

FIG. 8

**EUROPEAN SEARCH REPORT**

Application Number

EP 24 19 8267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 905 511 A1 (HITACHI LTD [JP]) 3 November 2021 (2021-11-03) * figures 1,9,10 * * paragraphs [0092] - [0095], [0027] * ----- | 1-15 | INV. H02P21/04 H02P21/36 B60L15/20 |
| X | US 2011/316457 A1 (KAHLER PAUL H [US]) 29 December 2011 (2011-12-29) * figures 2,1A * * paragraphs [0036], [0001] * ----- | 1-15 | |
| A | VARVOLIK VASYL ET AL: "Inverter Nonlinearity Effects on Self-Commissioning of Synchronous Reluctance Drives", 2021 24TH INTERNATIONAL CONFERENCE ON ELECTRICAL MACHINES AND SYSTEMS (ICEMS), KIEE & EMECS, 31 October 2021 (2021-10-31), pages 1792-1797, XP034051262, DOI: 10.23919/ICEMS52562.2021.9634484 [retrieved on 2021-12-02] * page 1792 * ----- | 7 | |

TECHNICAL FIELDS SEARCHED (IPC)

H02P
B60L

The present search report has been drawn up for all claims

| Place of search | Date of completion of the search | Examiner |
|---|---|---|
| The Hague | 20 February 2025 | Herrera Caballero, A |

EPO FORM 1503 03.82 (P04C01)

## ANNEX TO THE EUROPEAN SEARCH REPORT
## ON EUROPEAN PATENT APPLICATION NO.

EP 24 19 8267

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| EP 3905511 | A1 | 03-11-2021 | CN | 113196642 A | 30-07-2021 |
| | | | EP | 3905511 A1 | 03-11-2021 |
| | | | JP | 7181946 B2 | 01-12-2022 |
| | | | JP | WO2020137219 A1 | 21-10-2021 |
| | | | WO | 2020137219 A1 | 02-07-2020 |
| US 2011316457 | A1 | 29-12-2011 | NONE | | |

EPO FORM P0459

For more details about this annex : see Official Journal of the European Patent Office, No. 12/82